# EUROPÄISCHE PATENTANMELDUNG

(11) **EP 2 896 844 A1**
(43) Veröffentlichungstag der Anmeldung: **22.07.2015**
(21) Anmeldenummer: 14198103.5
(22) Anmeldetag: 16.12.2014
(51) Int. Cl.: F16C 33/54, B21D 53/12, B21D 28/30, F16C 19/36, B23Q 3/06

(54) **Verfahren und Vorrichtung zum Herstellen eines Wälzlagerkäfigs**

(30) Priorität: 19.12.2013 DE 102013226750
(71) Anmelder: Aktiebolaget SKF, 41 550 Göteborg (SE)
(72) Erfinder: Beyfuss, Berthold, 97535 Kaisten (DE); Friedrich, Hans-Jürgen, 97486 Königsberg-Römershofen (DE); Radina, Alfred, 97711 Poppenlauer (DE); Schierling, Jonas, 97437 Hassfurt (DE); Wagner, Gerhard, 97357 Prichsenstadt (DE)
(74) Vertreter: Kuhstrebe, Jochen

(57) **Zusammenfassung**

Bei einem Verfahren zum Herstellen eines Wälzlagerkäfigs wird in einem Vorgang ein Käfigrohling (7) in radialer Richtung mit einem Spannelement (6) in einer Vorrichtung (5) eingespannt. Dann wird der Käfigrohling (7) in einem Vorgang an einer ersten Stelle mit einem Werkzeug (8) bearbeitet. Nach dem Bearbeiten wird der Käfigrohling (7) in einem weiteren Vorgang gegenüber dem Spannelement (6) verdreht. Anschließend wird der Käfigrohling (7) an einer zweiten Stelle mit dem Werkzeug (8) bearbeitet. In einem Ausführungsbeispiel liegt der Käfigrohling (7) mit einer axialen Stirnfläche auf einer Anlagefläche (9) der Vorrichtung (5) auf und wird durch mehrere radial bewegbare Käfigspannsegmente (18) des Spannelements (6) positioniert. Zum Verdrehen des Käfigrohlings (7) sind in der Anlagefläche (9) mehrere Rollen vorgesehen, wobei die Spannsegmente (18) Gleitflächen aufweisen, die an der Innenfläche des Käfigrohlings (7) anliegen.

## Beschreibung

Ausführungsbeispiele beziehen sich auf ein Verfahren zum Herstellen eines Wälzlagerkäfigs und eine Vorrichtung zum Herstellen eines Wälzlagerkäfigs.

Wälzlagerkäfige können mit einer Vielzahl von konventionellen Verfahren auf konventionellen Vorrichtungen hergestellt werden. Dazu werden meist Käfigrohlinge bearbeitet. Für Wälzlagerkäfige ab einem bestimmten Durchmesser sind diese Verfahren oder die dazu benötigten Vorrichtungen relativ aufwändig. Bei manchen konventionellen Lösungen werden die Taschen aus einem rohrförmigen Käfigrohling gefräst. Bei anderen konventionellen Verfahren werden Käfige sogar aus einem Vollmaterial gefräst. Dies kann beispielsweise dann der Fall sein, wenn entsprechende Vorrichtungen zum Herstellen dieser Käfige sehr teuer sind.

Solche Vorrichtungen können beispielsweise Pressen sein. Diese sind wegen der Geometrie der Käfige oft Spezialanfertigungen. Zum Bearbeiten in der Presse wird der Käfigrohling beispielsweise mit einem Spannelement gespannt. In einer ersten Position kann dann mit einem Werkzeug der Presse eine erste Tasche aus dem Käfigrohling ausgestanzt werden. Der Käfigrohling wird dann mit dem Spannelement gegenüber dem Werkzeug in eine zweite Position gedreht. Anschließend kann beispielsweise eine weitere Tasche aus dem Käfigrohling ausgestanzt werden. Bei der Presse kann es sich beispielsweise um eine C-Portalpresse handeln. Um den Käfigrohling mit dem Spannelement in die unterschiedlichen Positionen weiter zu bewegen, sind die Pressen oft mit einem zusätzlichen Teileapparat ausgerüstet. Dadurch können die Pressen relativ aufwändig in der Herstellung sein. Dies kann beispielsweise bei der Herstellung oder Bearbeitung von Großlagerkäfigen der Fall sein. Großlagerkäfige weisen meist einen Durchmesser von über 250 mm oder sogar über 1000 mm auf.

In anderen Fällen können die Taschen beispielsweise mit einem Laserverfahren aus einem Käfigrohling ausgeschnitten werden. Dies kann aber beispielsweise nur bis zu einer Blechdicke von 10 mm möglich sein.

Es besteht also ein Bedarf daran, ein Konzept zur Herstellung eines Wälzlagerkäfigs bereitzustellen, mit dem die Herstellung des Wälzlagerkäfigs vereinfacht werden kann. Diesem Bedarf tragen ein Verfahren und eine Vorrichtung nach den unabhängigen Ansprüchen Rechnung.

Ausführungsbeispiele betreffen ein Verfahren zum Herstellen eines Wälzlagerkäfigs. Bei einem Wälzlagerkäfig wird ein Käfigrohling in radialer Richtung mit einem Spannelement gespannt. Dann wird der Käfigrohling an einer ersten Stelle bearbeitet. Der Käfigrohling wird gegenüber dem Spannelement verdreht. Der Käfigrohling wird an einer zweiten Stelle bearbeitet.

Dadurch, dass der Käfigrohling zum Bearbeiten der zweiten Stelle gegenüber dem Spannelement verdreht wird, kann bei manchen Ausführungsbeispielen ermöglicht werden, dass das Spannelement einfach ausgebildet sein kann und nicht mit dem Käfigrohling verdreht werden muss.

Ein Käfigrohling kann dabei jedwedes Bauteil sein, aus dem ein Wälzlagerkäfig hergestellt werden kann. Beispielsweise kann es sich bei dem Käfigrohling um ein Rohr handeln, aus dessen Wänden die Käfigtaschen ausgestanzt werden. Ferner kann ein Käfigrohling auch ein bereits bearbeitetes Bauteil sein. Diese kann beispielsweise schon Taschen oder einzelne Taschen aufweisen, die nachbearbeitet werden sollen. Der Käfigrohling oder das Rohr kann als Zylinder ausgebildet sein. Alternativ kann der Käfigrohling oder das Rohr auch als Kegelstumpf ausgebildet sein. Bei dem Wälzlagerkäfig kann es sich um jedweden Wälzlagerkäfig handeln. Beispielsweise kann ein Wälzlagerkäfig ein Käfig für ein Zylinderrollenlager, ein Kegelrollenlager, ein Kugelrollenlager oder dergleichen sein.

Eine erste Stelle des Käfigrohlings kann beispielsweise jedwede zu bearbeitende Stelle eines Käfigrohlings sein. Beispielsweise kann die erste Stelle eine Position sein, an der eine Tasche eingebracht werden soll. Ferner kann die erste Stelle ein Steg sein, der geprägt werden soll. Ferner kann eine zweite Stelle des Käfigrohlings jedwede andere Stelle des Käfigrohlings als die erste Stelle sein. Ein Verdrehen des Käfigrohlings gegenüber dem Spannelement kann dabei in eine Umfangsrichtung des Käfigrohlings erfolgen. Eine Umfangsrichtung kann dabei eine Richtung entlang eines Außendurchmessers des Käfigrohlings sein. Beispielsweise kann das Verdrehen um eine Rotationsachse des Käfigrohlings erfolgen. Ein Spannen kann dabei beispielsweise von radial innen nach radial außen erfolgen. Es kann also eine radial nach außen wirkende Kraft auf den Käfigrohling ausgeübt werden. Dies kann beispielsweise an einer Mehrzahl von Stellen erfolgen. Diese Stellen können unter Umständen punktuell voneinander beabstandet sein.

Bei einigen weiteren Ausführungsbeispielen ist das Bearbeiten ein Ausstanzen einer Tasche. So kann bei manchen Ausführungsbeispielen ermöglicht werden, dass aus einem Rohrabschnitt ein Käfig mit in Umfangsrichtung angeordneten Seitenringen entsteht. Die Seitenringe können beispielsweise durch Stege verbunden sein. Dabei können die Taschen jedwede Form aufweisen. Beispielsweise können die Taschen als Rechteck, als Trapez oder als Kreis ausgebildet sein. Die Taschen können ggf. auch als eine Projektion einer dieser Formen auf einer gewölbten oder gebogenen Oberfläche ausgebildet sein. So kann bei manchen Ausführungsbeispielen ermöglicht werden, dass sich die Taschen zur Aufnahme des entsprechenden Wälzkörpers, beispielsweise einer Zylinderrolle, einer Kegelrolle oder einer Kugel eignen. Beispielsweise kann zum Ausstanzen ein Stempel von einem radial innen liegenden Bereich des Käfigrohlings, durch eine Wand des Käfigrohlings gedrückt werden. Eine Matrize kann beispielsweise in einem Bereich, der in radialer Richtung außerhalb des Käfigrohlings liegt, angeordnet sein. Beispielsweise kann die Matrize an einem Außendurchmesser des Käfigrohlings anliegen. Beispielsweise kann ein Verdrehen des Käfigrohlings gegenüber dem Spannelement auf jedwede Art und Weise erfolgen. Beispielsweise kann dazu ein Anschlag vorgesehen sein. Der Käfigrohling kann beispielsweise bis zu dem Anschlag verdreht werden kann. Beispielsweise kann das Verdrehen von Hand, mit einem verstellbaren Anschlag über eine Positioniervorrichtung oder automatisiert über einen Rotationsantrieb erfolgen.

Bei einigen weiteren Ausführungsbeispielen ist das Bearbeiten ein Prägen von Käfigstegen. Dann wird der Käfigrohling soweit zu dem Spannelement verdreht, bis einer der Käfigstege an einem Anschlag anliegt. So kann bei manchen Ausführungsbeispielen ermöglicht werden, dass der Käfigsteg bzw. die Käfigstege zum Prägen direkt positioniert werden können. Beispielsweise kann zum Prägen des Käfigstegs ein Prägestempel von radial innen gegen den Käfigrohling gedrückt werden. Der Prägestempel kann beispielsweise ein V-förmiger Stempel sein. Beispielsweise kann der V-förmige Stempel in radialer Richtung über einer Mittelachse einer Tasche positioniert werden. So kann bei manchen Ausführungsbeispielen ermöglicht werden, dass Kanten der Stege, an denen sich Wälzkörper reiben oder stören könnten, entfernt werden.

Bei einigen weiteren Ausführungsbeispielen wird zum Spannen des Käfigrohlings ein Durchmesser des Spannelements auf einen Innendurchmesser des Käfigrohlings vergrößert. So kann bei manchen Ausführungsbeispielen ermöglicht werden, dass die Spanneinrichtung auf eine Vielzahl von Käfigrohlingen angepasst werden kann.

Bei einigen weiteren Ausführungsbeispielen ist die Spanneinrichtung ausgebildet, um den Käfigrohling in einem Bereich zu spannen, der später einen in die Umfangsrichtung angeordneten Seitenring des Wälzlagerkäfigs ausbildet. So kann bei manchen Ausführungsbeispielen ggf. ermöglicht werden, dass die Spanneinrichtung nicht in Bereichen des Käfigrohlings anliegt, die bearbeitet werden sollen bzw. aus denen Material ausgestanzt werden soll.

Bei einigen weiteren Ausführungsbeispielen wird der Käfigrohling an einer Anlagefläche positioniert. Dabei wird der Käfigrohling an einer Anlagefläche so positioniert, dass eine axiale Stirnfläche des Käfigrohlings zumindest abschnittsweise an der Anlagefläche anliegt. So kann bei manchen Ausführungsbeispielen ermöglicht werden, dass der Käfigrohling in axialer Richtung eine Positionierung durch die Anlagefläche erhält. Dies könnte dazu führen, dass das Spannelement einfacher ausgebildet werden kann. Dies kann beispielsweise möglich sein, weil das Spannelement ggf. die Positionierung in axialer Richtung nicht übernehmen muss. Beispielsweise kann die axiale Stirnfläche des Käfigrohlings eine in eine axiale Richtung weisende Stirnfläche eines in radialer Richtung umlaufend angeordneten späteren Seitenrings des Käfigs sein.

Bei einigen weiteren Ausführungsbeispielen wird der Käfigrohling so gespannt, dass eine Rotationsachse des Käfigrohlings parallel zu einer wirkenden Gewichtskraft des Käfigrohlings ausgerichtet ist. Dadurch kann bei manchen Ausführungsbeispielen beispielsweise ermöglicht werden, dass der Käfigrohling durch seine eigene Gewichtskraft eine gleichmäßige Verformung in Richtung der Gewichtskraft erhält. Dadurch kann die Spanneinrichtung einfacher ausgebildet sein. Dieser Effekt könnte beispielsweise dadurch erhöht werden, dass der Käfig in Richtung seiner wirkenden Gewichtskraft auf der Anlagefläche aufliegt. Beispielsweise kann die Anlagefläche dazu senkrecht zu der wirkenden Gewichtskraft des Käfigrohlings ausgerichtet sein. Eine parallele Ausrichtung einer Rotationsachse des Käfigrohlings zu der wirkenden Gewichtskraft des Käfigrohlings kann dabei einen Winkelbereich einschließen. Der Winkelbereich kann einen Anfangs- und einen Endwert aufweisen. Ein Anfangs- und ein Endwert des Winkelbereichs können beispielsweise 0°, 1°, 2°, 3°, 4°, 10°, 15°, 20°, 30° oder 45° sein.

Ausführungsbeispiele betreffen eine Vorrichtung zum Herstellen eines Wälzlagers. Die Vorrichtung umfasst ein Spannelement. Das Spannelement ist ausgebildet, um einen Käfigrohling in radialer Richtung und entlang einer Umfangsrichtung gegenüber einem Werkzeug auszurichten. Dabei kann der Käfig gegenüber dem Spannelement verdreht werden.

Dadurch, dass der Käfig gegenüber dem Spannelement verdreht werden kann, kann bei manchen Ausführungsbeispielen ermöglicht werden, dass das Spannelement selbst sehr einfach und nicht verdrehbar ausgebildet werden kann. So kann bei manchen Ausführungsbeispielen die gesamte Vorrichtung einfacher ausgebildet sein, weil kein Mittel zum Verdrehen des Spannelements vorgesehen werden muss.

Das Werkzeug kann beispielsweise eine Stanz- oder Prägevorrichtung bzw. ein Stanz- oder Prägestempel sein. Beispielsweise kann die Stanz- oder Prägevorrichtung hydraulisch betrieben werden.

Bei manchen Ausführungsbeispielen kann das Spannelement ausgebildet sein, um eine radial nach außen wirkende Kraft auf den Käfigrohling auszuüben. Diese Kraft kann beispielsweise wenigstens 1N, 5N, 10N, 100N, 500N oder 10.000 N betragen. Unter Umständen kann das Spannelement den Käfigrohling lediglich von radial innen berühren. Bei einigen weiteren Ausführungsbeispielen weist das Spannelement eine Gleitfläche auf. Die Gleitfläche kann eine radial nach außen gerichtete Fläche des Spannelements sein. So kann bei manchen Ausführungsbeispielen ermöglicht werden, dass eine Reibung möglichst gering gehalten werden kann, wenn der Käfig gegenüber dem Spannelement verdreht wird. Unter Umständen kann das Spannelement eine Mehrzahl von Gleitflächen, beispielsweise wenigstens 2, 3, 4, 5, 6, 7, 8, 9 oder mehr aufweisen. Diese können in Umfangrichtung voneinander beabstandet sein. Der Käfigrohling kann unter Umständen in Umfangsrichtung zwischen den Gleitflächen von dem Spannelement beabstandet sein.

Bei einigen weiteren Ausführungsbeispielen weist die Vorrichtung eine Anlagefläche auf. Die Anlagefläche ist ausgebildet, um zumindest abschnittsweise an einer axialen Stirnfläche des Käfigrohlings anzuliegen. So kann bei manchen Ausführungsbeispielen ermöglicht werden, dass eine axiale Ausrichtung des Käfigrohlings über die Anlagefläche erfolgt. Dadurch muss bei manchen Ausführungsbeispielen das Spannelement die axiale Ausrichtung oder Positionierung des Käfigrohlings nicht übernehmen. Dadurch könnte das Spannelement einfacher ausgebildet sein.

Bei einigen weiteren Ausführungsbeispielen ist die Anlagefläche waagerecht ausgerichtet, so dass eine Rotationsachse des Käfigrohlings parallel zu einer wirkenden Gewichtskraft des Käfigrohlings ausgerichtet ist. So kann bei manchen Ausführungsbeispielen ermöglicht werden, dass die Gewichtskraft des Käfigrohlings von der Anlagefläche aufgenommen wird. Dadurch könnte eine Verformung des Käfigrohlings in Richtung der Gewichtskraft zumindest reduziert oder sogar vermieden werden. Dadurch kann beispielsweise eine Verformung des Käfigrohlings in Richtung seiner Gewichtskraft vermieden werden. Beispielsweise kann eine Rotationsachse des Käfigrohlings, die parallel zu einer wirkenden Gewichtskraft des Käfigrohlings ausgerichtet ist, einen Winkel mit der Gewichtskraft einschließen. Der Winkel kann in einem Winkelbereich liegen. Der Winkelbereich kann einen Anfangs- und einen Endwert aufweisen. Ein Anfangs- und ein Endwert des Winkelbereichs können beispielsweise 0°, 1°, 2°, 10°, 20°, 30° oder 45° sein. Dabei kann bei manchen Ausführungsbeispielen mit einem kleineren Winkel beispielsweise erreicht werden, dass ein größerer Anteil der Gewichtskraft des Käfigrohlings von der Anlagefläche aufgenommen werden kann.

Bei einigen weiteren Ausführungsbeispielen weist das Werkzeug einen Rahmen auf. Dieser ist zur Bearbeitung des Werkzeugrohlings an vier Seiten geschlossen. So kann bei manchen Ausführungsbeispielen eine Stabilität des Werkzeugs erhöht sein. Der Rahmen kann sich in einer Ebene erstrecken, die parallel zu einer Bewegung oder einem Hub des Stempels ausgerichtet ist. An einer Seite des Rahmens kann eine Matrize, in die der Stempel laufen kann, befestigt sein. Eine Seite des Rahmens kann entfernt oder geöffnet werden. So kann bei manchen Ausführungsbeispielen ein Käfigrohling in das Werkzeug eingelegt oder wieder aus diesem entnommen werden. Beispielsweise kann diese Seite ein Nebenjoch sein. Das Nebenjoch kann parallel zu einem Hub oder einer Bewegung des Stempels ausgerichtet sein.

Bei einigen weiteren Ausführungsbeispielen ist das Spannelement auf eine Mehrzahl von Innendurchmessern zu spannender Käfigrohlinge einstellbar. So kann bei manchen Ausführungsbeispielen ermöglicht werden, dass das Spannelement für eine Vielzahl von Käfigrohlingen eingesetzt werden kann. Unter Umständen kann dazu das Spannelement oder wenigsten ein Segment des Spannelements in radialer Richtung verstellt werden. Beispielsweise kann eine Position der wenigstens einen Gleitfläche in radialer Richtung veränderbar sein.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Figur 1 zeigt ein Flussdiagramm eines Verfahrens zur Herstellung eines Wälzlagerkäfigs gemäß einem Ausführungsbeispiel;
Figur 2 zeigt eine schematische Darstellung einer perspektivischen Ansicht einer Vorrichtung zum Herstellen eines Wälzlagerkäfigs gemäß einem Ausführungsbeispiel;
Figur 3 zeigt eine schematische Darstellung einer geschnittenen Seitenansicht der Vorrichtung zum Herstellen eines Wälzlagerkäfigs gemäß Figur 2;
Figur 4 zeigt eine schematische Darstellung einer Draufsicht der Vorrichtung zum Herstellen eines Wälzlagerkäfigs gemäß Figur 2;
Figur 5 zeigt eine schematische Darstellung einer Seitenansicht eines Werkzeugs der Vorrichtung zum Herstellen eines Wälzlagerkäfigs gemäß Figur 2;
Figur 6a zeigt eine schematische Darstellung einer perspektivischen Ansicht einer Vorrichtung zur Käfigpositionierung für das Werkzeug gemäß Figur 5;
Figur 6b zeigt eine schematische Darstellung einer Seitenansicht der Vorrichtung zur Käfigpositionierung gemäß Figur 6a;
Figur 6c zeigt eine schematische Draufsicht der Vorrichtung zur Käfigpositionierung nach den Figuren 6a und 6b.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

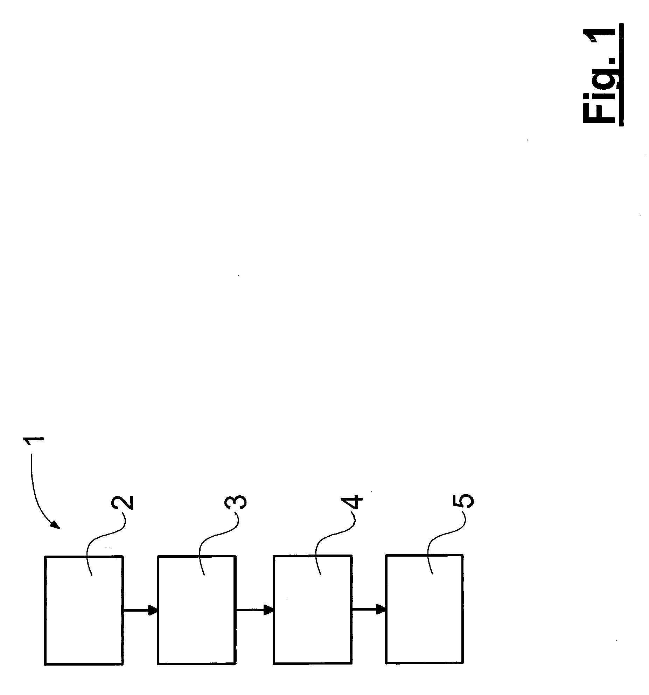

Figur 1 zeigt ein Flussdiagramm eines Verfahrens zur Herstellung eines Wälzlagerkäfigs gemäß einem Ausführungsbeispiel.

Bei einem Verfahren 1 zum Herstellen eines Wälzlagerkäfigs wird in einem Vorgang 2 ein Käfigrohling in radialer Richtung mit einem Spannelement gespannt. Dann wird der Käfigrohling in einem Vorgang 3 an einer ersten Stelle bearbeitet. Nach dem Bearbeiten wird der Käfigrohling in einem weiteren Vorgang 4 gegenüber dem Spannelement verdreht. Anschließend wird der Käfigrohling an einer zweiten Stelle bearbeitet.

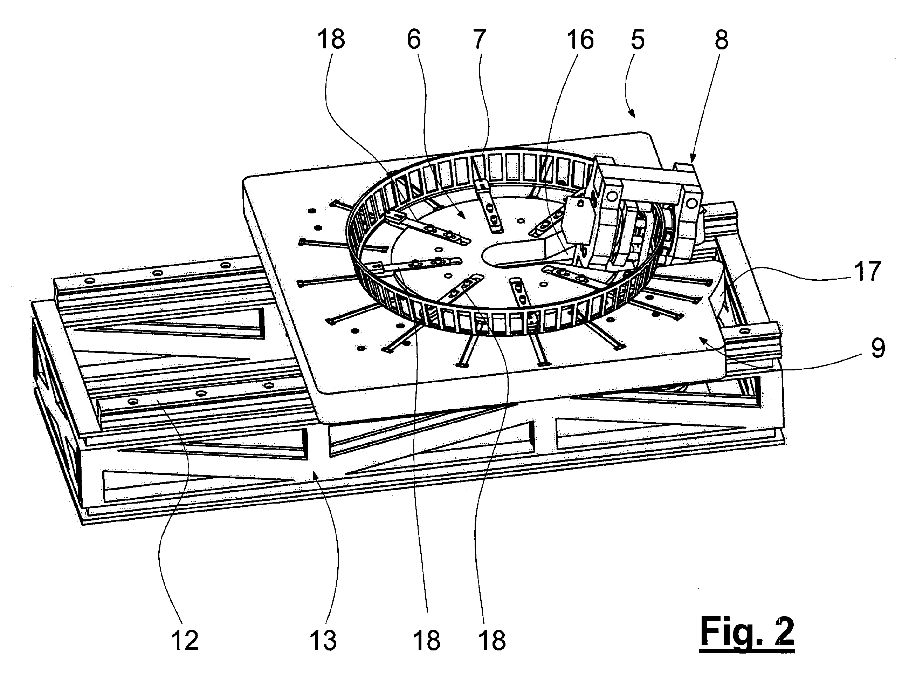

Figur 2 zeigt eine schematische Darstellung einer perspektivischen Ansicht einer Vorrichtung zum Herstellen eines Wälzlagerkäfigs gemäß einem Ausführungsbeispiel.

Wie in Figur 2 gezeigt, umfasst eine Vorrichtung 5 zum Herstellen eines Wälzlagerkäfigs ein Spannelement 6. Das Spannelement 6 ist ausgebildet, um einen Käfigrohling 7 in radialer Richtung und entlang seiner Umfangsrichtung des Käfigrohlings 7 gegenüber einem Werkzeug 8 auszurichten. Ferner ist das Spannelement 6 ausgebildet, den Käfigrohling 7 so zu spannen, dass der Käfigrohling 7 gegenüber dem Spannelement 6 verdreht werden kann.

Bei dem Ausführungsbeispiel der Figur 2 umfasst die Vorrichtung 1 neben dem Spannelement 6 und dem Werkzeug 8 auch eine Anlagefläche 9. Das Spannelement 6 ist auf den Anlagefläche 9 befestigt. Die Anlagefläche 9 kann gegenüber dem Werkzeug 8 in einer Ebene bewegt werden. Diese Ebene liegt parallel zu einem Seitenring 10 des Käfigrohlings 7 bzw. späteren Käfigs. Der Seitenring 10 erstreckt sich in eine Umfangsrichtung des Käfigs angeordnet ist. Zum Bewegen der Anlagefläche 9 umfasst die Vorrichtung 5 eine Linearführung 11. Eine Schiene 12 der Linearführung 11 ist dazu auf einem Unterbau 13 der Vorrichtung 5 angeordnet.

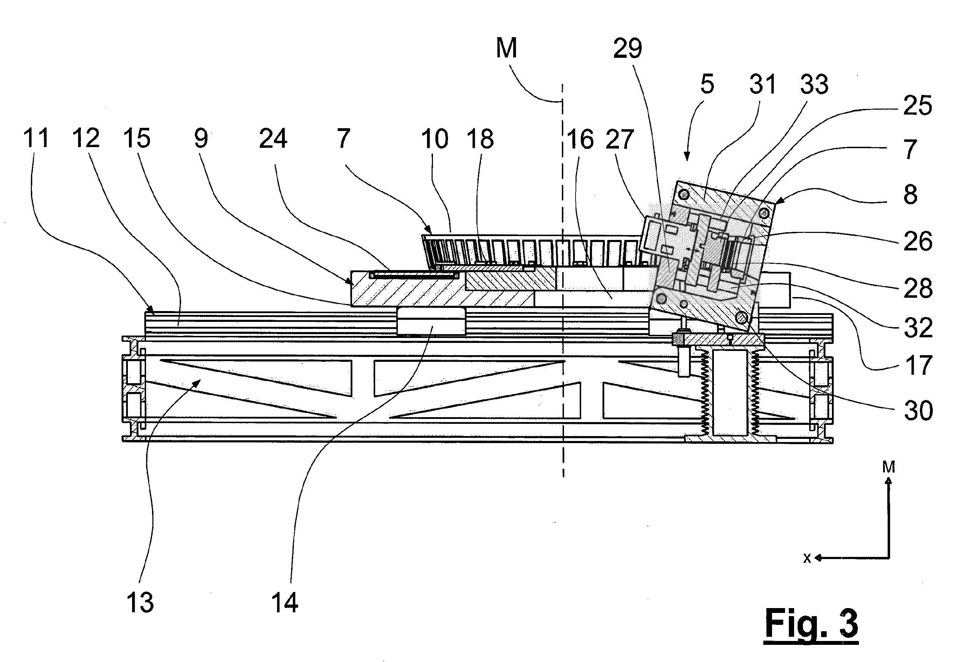

Figur 3 zeigt eine schematische Darstellung einer geschnittenen Seitenansicht der Vorrichtung zum Herstellen eines Wälzlagerkäfigs gemäß Figur 2.

Wie in Fig. 3 dargestellt, umfasst die Linearführung 11 einen Schlitten 14. Dieser ist an einer Unterseite 15 der Anlagefläche 9 befestigt. Ferner ist der Schlitten 14 auch beweglich auf der Schiene 12 der Linearführung 11 angeordnet. Die Anlagefläche 9 weist einen Ausschnitt 16 auf. In dem Ausschnitt 16 der Anlagefläche 9 ist das Werkzeug 8 angeordnet. Der Ausschnitt 16 ragt dabei von einer Stirnfläche 17 der Anlagefläche 9 in die Anlagefläche 9. Das Spannelement 6 ist auf der Anlagefläche 9 angeordnet. Der Ausschnitt 16 erstreckt bis über einen Mittelpunkt des Spannelements 6. Der Ausschnitt 16 ragt dabei mindestens so weit in die Anlagefläche 9, dass das Werkzeug 8 an der Stelle positioniert werden kann, an der der Käfigrohling 7 bearbeitet werden soll. Dadurch, dass das Werkzeug 8 in dem Ausschnitt 16 angeordnet ist, kann bei manchen Ausführungsbeispielen ermöglicht werden, dass der Käfigrohling 7 mit einem Großteil seiner Stirnfläche von der Auflagefläche 9 gehalten werden kann. Die Stirnfläche des Käfigrohlings 7 kann in eine axiale Richtung M des Käfigrohlings 7 gerichtet sein. Beispielsweise weist der Ausschnitt 16 dazu eine Breite auf, die beispielsweise maximal ein 1/20, 1/15, 1/10, 1/8, 1/6, 1/5, 1/4 oder 1/3 einer Länge eines Umfangs des Käfigrohlings 7 entspricht.

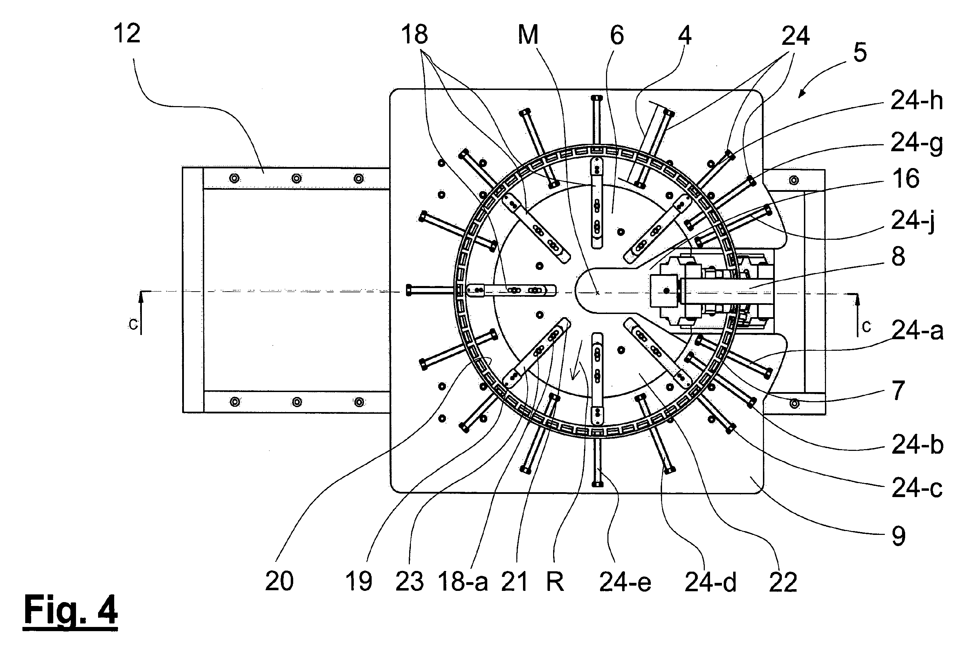

Figur 4 zeigt eine schematische Darstellung einer Draufsicht der Vorrichtung zum Herstellen eines Wälzlagerkäfigs gemäß Figur 2.

Wie in Figur 4 dargestellt, umfasst die Spannelement 6 eine Mehrzahl variabler Käfigspannsegmente 18. Bei dem Ausführungsbeispiel der Figur 4 sind die Käfigspannsegmente 18 jeweils als eine Schiene ausgebildet. Die Käfigspannsegmente 18 sind so angeordnet, dass sich ihre Länge in eine radiale Richtung des Käfigrohlings 7 erstreckt. Bei dem Ausführungsbeispiel der Figur 4 umfasst das Spannelement 6 sieben Käfigspannsegmente 18. Die sieben Käfigspannsegmente 18 und das Werkzeug 8 sind in einem regelmäßigen Abstand zueinander angeordnet, so dass sie einen Kreis in acht Teile teilen.

Bei weiteren, nicht dargestellten Ausführungsbeispielen kann das Spannelement jedwede andere Anzahl von Käfigspannsegmenten aufweisen.

Bei dem Ausführungsbeispiel der Figuren sind alle Käfigspannsegmente 18 gleich ausgebildet. Bei weiteren, nicht dargestellten Ausführungsbeispielen können sich einzelne Käfigspannelemente in ihrer Ausgestaltung voneinander unterscheiden.

Stellvertretend wird nur die Ausbildung des Käfigspannsegments 18-a beschrieben. Das Käfigspannsegment 18-a weist eine Gleitfläche 19 auf. Die Gleitfläche 19 ist der Teil des Käfigspannelements 18-a, der mit dem Käfigrohling 7 in Kontakt kommt. Bei dem vorliegenden Ausführungsbeispiel weist die Gleitfläche 19 eine nach radial außen gewölbte Oberfläche auf. Beispielsweise kann ein Radius der Wölbung kleiner als ein Innendurchmesser des Käfigrohlings 7 sein. So kann bei manchen Ausführungsbeispielen beispielsweise ermöglicht werden, dass der Käfigrohling 7 und die Gleitfläche 19 nur eine kleine Kontaktfläche miteinander aufweisen. Dadurch könnte bei einem Verschieben des Käfigrohlings 7 gegenüber dem Spannelement 6 und damit auch der Gleitfläche 19 nur eine möglichst geringe Reibung zwischen dem Käfigrohling 7 und Spannelement 19 erzeugt werden. Die Gleitfläche 19 liegt an einer nach radial innen zeigenden, in Umfangsrichtung verlaufenden Fläche 20 des Käfigrohlings 7 an. Mit anderen Worten ausgedrückt, liegt die Gleitfläche 19 an einem Innendurchmesser des Käfigrohlings 7 an.

Eine Position des Käfigspannelements 18-a kann gegenüber einer Mittelachse M in radialer Richtung R des Käfigrohlings 7 verändert werden. Bei dem vorliegenden Ausführungsbeispiel ist das Käfigspannsegment 18-a dazu in einer Ausnehmung 21 beweglich geführt. Die Ausnehmung 21 ist in einer Grundplatte 22 des Spannelements 6 eingebracht. Die Grundplatte 22 kann beispielsweise fest mit der Anlagefläche 9 verbunden sein. Die Ausnehmung 21 erstreckt sich ebenfalls in eine radiale Richtung des Käfigrohlings 7. Über ein Befestigungsmittel 23 kann das Käfigspannsegment 18-a auf einem bestimmten Durchmesser fixiert werden. Dies kann beispielsweise der Innendurchmesser des zu bearbeitenden Käfigrohlings 7 sein. Das Fixieren oder ein Anpassen kann beispielsweise so erfolgen, dass die Gleitfläche 17 an einem Innendurchmesser des zu spannenden Käfigrohlings 7 positioniert wird. Beispielsweise kann das Käfigspannsegment 18-a dazu in der Ausnehmung 21 festgelegt werden. Dazu kann die Grundplatte 22 eine nicht dargestellte Befestigungsstruktur aufweisen. Diese kann mit dem Befestigungsmittel 23 zusammenwirken. Beispielsweise kann in das Käfigspannsegment 18-a als Befestigungsmittel 23 ein Langloch oder eine Mehrzahl von Langlöchern eingebracht sein.

Bei einigen weiteren, nicht dargestellten Ausführungsbeispielen kann das Käfigspannsegment jedwede Form aufweisen. Beispielsweise kann das Käfigspannsegment die Form eines Kreissegments aufweisen. Bei einigen weiteren Ausführungsbeispielen können als Befestigungsmittel jedwede Befestigungsstruktur und eine entsprechende Gegenstruktur an der Anlagefläche vorgesehen sein. Beispielsweise kann dazu eine Klemmeinrichtung, eine Rasteinrichtung oder dergleichen vorgesehen sein. Beispielsweise können bei manchen Ausführungsbeispielen die einzelnen Käfigspannsegmente miteinander verbunden sein, so dass ein gemeinsames Verstellen der Käfigspannsegmente möglich sein kann.

Die Anlagefläche 9 umfasst eine Mehrzahl von Rollen 24. Die Rollen 24 sind ausgebildet, um den Käfigrohling 7 zu lagern. Bei dem Ausführungsbeispiel der Figuren sind siebzehn Rollen vorhanden. Die Rollen 24 dienen dazu, um eine Reibung, zwischen dem Käfigrohling 7 und der Anlagefläche 9 zu reduzieren. Dies kann ggf. wichtig sein, wenn der Käfigrohling 7 gegenüber dem Spannelement 6 verdreht wird. Bei dem Ausführungsbeispiel sind die Rollen 24 bzw. deren Rotationsachsen parallel zu der radialen Richtung des Käfigrohlings 7 angeordnet. Beispielsweise kann die Oberfläche der Rollen 24 jeweils in der gleichen Ebene, wie die Oberfläche der Anlagefläche 9 liegen. Alternativ können die Rollen 24 so angeordnet sein, dass sie aus der Anlagefläche 9 herausragen. Dies kann bei manchen Ausführungsbeispielen dazu führen, dass der Käfigrohling 7 nur an den Rollen 24 an der Anlagefläche 9 anliegt. Die Rollen 24 sind jeweils in einer Oberfläche der Anlagefläche 9 angeordnet. Die Rollen 24 weisen eine Länge L auf. Dabei ist die Länge L der Rollen 24 so gewählt, dass die Rollen 24 in einem Bereich eines kleinsten möglichen und eines größten möglichen Durchmessers möglicher Käfigrohlinge liegen, die auf der Vorrichtung 5 bearbeitet werden soll. Die Rollen 24 sind in unterschiedlichen Abschnitten zueinander angeordnet. Die drei Rollen 24-a, 24-b und 24-c sind anschließend an das Werkzeug 8 bzw. den Ausschnitt 16 angeordnet. Diese weisen einen kleineren Abstand zueinander auf, als die Rollen 24-d und 24-e, die anschließend an die Rollen 24-a, 24-b und 24-c angeordnet sind. Analog zu den drei Rollen 24-a, 24-b und 24-c sind auch auf der anderen Seite des Ausschnitts 16 bzw. des Werkzeugs 8 drei Rollen 24-f, 24-g, 24-h angeordnet, die einen geringeren Abstand zueinander aufweisen, als die Rollen 24-d und 24-e.

Zum Bewegen des Käfigrohlings 7 gegenüber dem Spannelement 6 und damit auch gegenüber dem Werkzeug 8 kann eine nicht dargestellte integrierte Positioniervorrichtung vorgesehen sein. Ferner kann die Vorrichtung 5 dazu auch einen nicht dargestellten Rotationsantrieb aufweisen. Dazu kann beispielsweise ein Teilungswinkel über ein Wegmesssystem erfasst werden. In Fällen, in denen nur Käfige in kleinen Stückzahlen hergestellt werden sollen, kann der Käfig bzw. der Käfigrohling 7 auch von Hand aus von der ersten Stelle an die zweite Stelle bewegt werden. Dazu kann beispielsweise ein ebenfalls nicht dargestellter Anschlag vorgesehen sein. Mit anderen Worten ausgedrückt, kann das Weitertakten von Tasche zu Tasche bzw. zwischen Bearbeitungspositionen händisch, beispielsweise mit einem verstellbaren Anschlag, erfolgen.

Das Werkzeug 8 kann bei dem Ausführungsbeispiel der Figuren für unterschiedliche Arbeitsvorgänge eingesetzt werden. Zum einen kann das Werkzeug zum Stanzen der Taschen verwendet werden. Dazu wird das Werkzeug 8 mit einem Fensterstempel 25 und eine Matrize 26, in die der Fensterstempel läuft, ausgerüstet. Wie in Figur 3 dargestellt, ist der Fensterstempel 25 mit einen Presszylinder 27 verbunden. Der Presszylinder 27 ist radial innerhalb des Käfigrohlings 7 angeordnet. Zum Stanzen wird der Fensterstempel 25 von einer nach radial innen gerichteten Umfangsfläche 20 des Käfigrohlings 7 nach radial au-ßen in die Matrize 26 gedrückt. Als Presszylinder 27 kann jedweder Zylinder eingesetzt werden. Beispielsweise wird als Presszylinder 27 ein hydraulischer Zylinder eingesetzt. Beispielsweise kann bei manchen Ausführungsbeispielen als Presszylinder 27 ein Linearantrieb (z.B. ein Zylinder Ultra Power (HRP)) eingesetzt werden. Der Linearantrieb kann beispielsweise eine Länge von ca. 400 mm aufweisen und beispielsweise auf eine maximale Länge von 8000 mm ausgefahren werden. Ferner kann der Zylinder oder Linearantrieb beispielsweise einen Durchmesser zwischen 140 mm und 160 mm aufweisen. Mit dem Zylinder oder Linearantrieb kann beispielsweise eine statische Kraft von 7182 kN und ein dynamische Kraft von 1600 kN ausgeübt werden.

Beispielsweise kann der Käfigrohling 7 einen Durchmesser von über 250 mm, 500 mm, 1000 mm, 1500 mm, 2000 mm oder 2500 mm aufweisen. Beispielsweise kann der Käfigrohling 7 eine Dicke von 10 mm bis 12 mm aufweisen.

Um das aus der Tasche ausgestanzte Material abzuführen, weist das Werkzeug 8 einen Abstreifer 28 auf. Das Werkzeug 8 umfasst ein Hauptjoch 29. Das Hauptjoch 29 dient zur Aufnahme des Presszylinders 27. Die Matrize 26 ist in einem Rahmen 30 aufgenommen. Der Rahmen 30 ist über ein Nebenjoch 31 mit dem Hauptjoch 29 verbunden. Ferner ist das Hauptjoch 29 mit dem Rahmen 30 über eine Führungssäule 32 verbunden. Eine weitere Führungssäule 33 ragt von dem Hauptjoch 29 in einen Innenraum des Werkzeugs 8 in Richtung des Rahmens 30. Entlang der Führungssäulen 32 und 33 wird der Fensterstempel 25 geführt. An einer Oberseite des Werkzeugs 8 sind der Rahmen 30 und das Hauptjoch 29 über das Nebenjoch 31 verbunden. Das Nebenjoch 31 ist abnehmbar ausgebildet. So kann der Käfigrohling 7 in das Werkzeug 8 eingelegt bzw. wieder aus diesem zu entnommen werden. Mit anderen Worten ausgedrückt, kann der zu bearbeitende Käfigrohling 7 oder der fertige Käfig durch das abnehmbare Nebenjoch 31 gewechselt werden.

Das Nebenjoch 31 und auch die Führungssäule 33 und gegebenenfalls die Führungssäule 32 sind demontierbar. Dann kann das Hauptjoch 29 weggeschwenkt werden. So können bei manchen Ausführungsbeispielen das Werkzeug 8 bzw. der Fensterstempel 25 und/oder die Matrize 26 einfacher gewechselt bzw. getauscht werden. Beispielsweise kann der Fensterstempel 25 durch einen anderen Fensterstempel in einer anderen Größe oder Form ersetzt werden. Beispielsweise kann der Fensterstempel 25 bei einem Verschleiß ersetzt werden. Ferner kann die Matrize 26 passend zu dem Fensterstempel 26 ausgewählt oder gewechselt werden. Des Weiteren kann das Werkzeug 8 auch für einen anderen Bearbeitungsvorgang, nämlich ein Prägen umgerüstet werden.

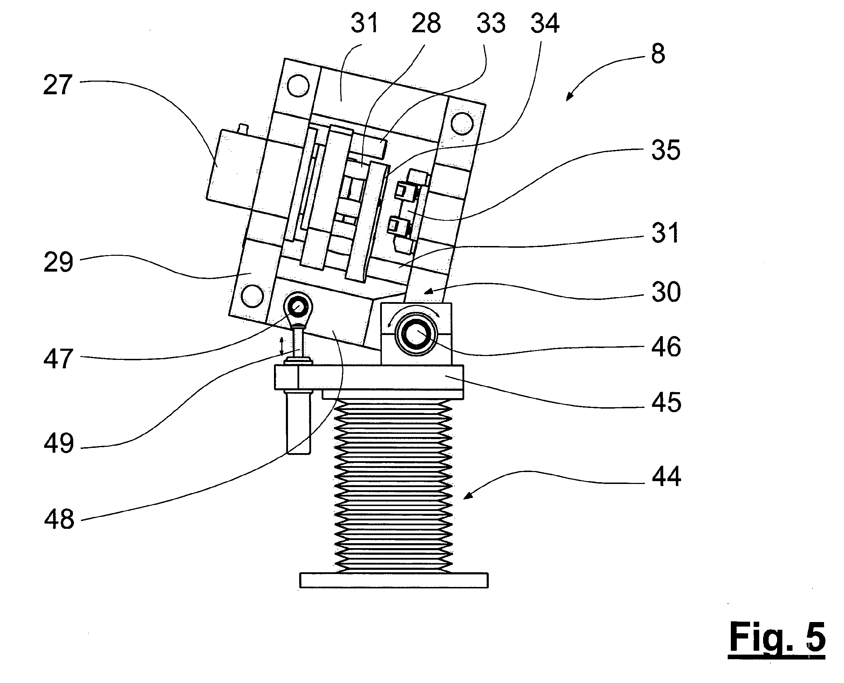

Figur 5 zeigt eine schematische Darstellung einer Seitenansicht eines Werkzeugs der Vorrichtung zum Herstellen eines Wälzlagerkäfigs gemäß Figur 1.

Wie in Figur 5 dargestellt, kann an dem Presszylinder 27 auch ein Prägestempel 34 befestigt werden. Der Prägestempel 34 kann dazu dienen, um bei einem Käfigrohling 7, aus dem bereits die Taschen ausgestanzt wurden, die Käfigstege entsprechend zu bearbeiten. Wenn das Werkzeug 8 den Prägestempel 34 aufweist bzw. dieser in dem Werkzeug 8 montiert ist, weist das Werkzeug 8 auch eine Käfigpositionierung 35 auf. Mittels der Käfigpositionierung 35 kann der Käfigrohling 7 aus dem bereits Taschen ausgestanzt wurden, zum Prägen der Stege gegenüber dem Werkzeug positioniert werden. Die Käfigpositionierung 35 ist an dem Rahmen 30 des Werkzeugs 8 angeordnet. Die Käfigpositionierung 35 ist radial außerhalb des Käfigrohlings 7 angeordnet.

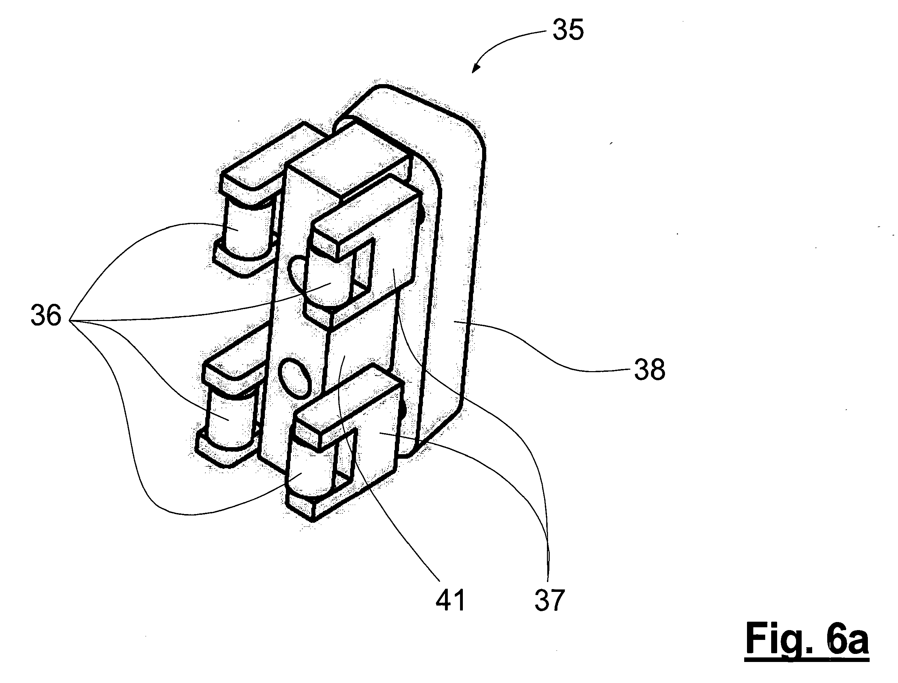

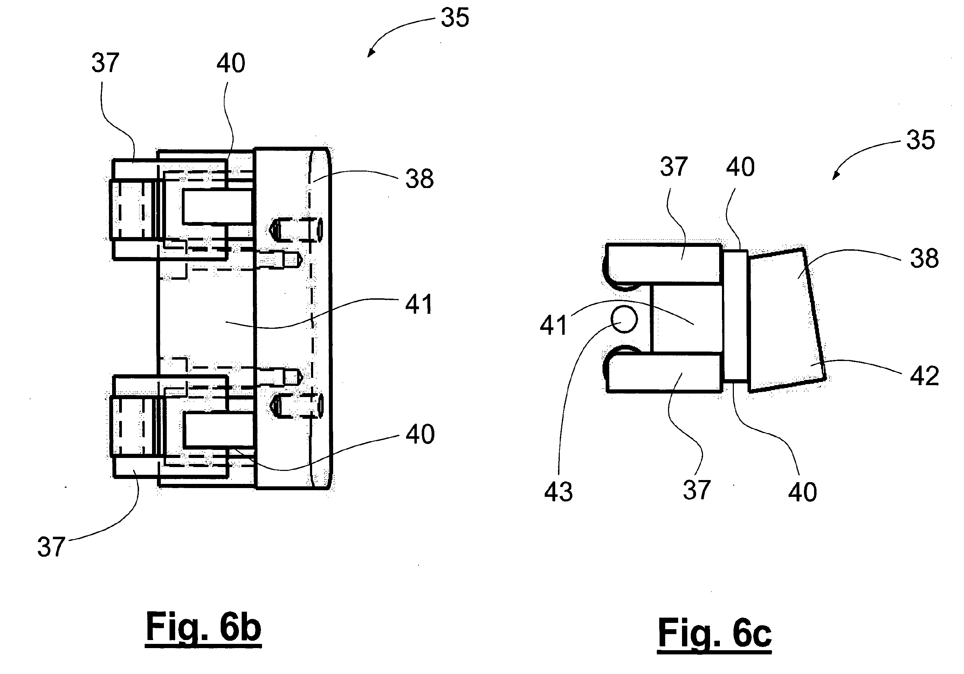

Die Figuren 6a bis 6c zeigen vergrößerte Detailansichten der Käfigpositionierung 35.

Wie in Figur 6a dargestellt, weist die Käfigpositionierung 35 vier Rollen 36 auf. Die Rollen 36 sind so angeordnet, dass ein Käfigsteg jeweils zwischen zwei gegenüberliegenden Rollen 36 aufgenommen werden kann. Dabei sind die Rollen 36 so angeordnet, dass auf einer Seite des Käfigstegs zwei Rollen 36 liegen. Die Rollen 36 sind jeweils so angeordnet, dass ihre Rotationsachsen sich im Wesentlichen parallel zu einem Käfigsteg bzw. dessen Erstreckung zwischen den in Umfangsrichtung angeordneten Seitenringen des Käfigs, erstrecken. Jede der Rollen 36 ist in einem Befestigungselement 37 aufgenommen. Dabei weist jedes der Befestigungselemente 37 ein C-förmiges Profil auf. In dem C-förmigen Ausschnitt ist die Rolle 36 angeordnet. Die Befestigungselemente 37 sind auf nicht dargestellten Schienen an einer Grundplatte 38 befestigt.

Wie in Figur 6b erkennbar, ist jedes der Befestigungselemente 37 über eine Feder 40 mit der Grundplatte 38 beweglich verbunden. Um eine Bewegung der Befestigungselemente 37 in Richtung eines Bereichs 43, in dem der Käfigsteg positioniert und aufgenommen werden soll, zu begrenzen, ist zwischen den Befestigungselementen 37 ein Anschlag 41 angeordnet. Der Anschlag 41 ist fest mit der Grundplatte 38 verbunden. Durch die Grundplatte 38 kann die Käfigpositionierung 35 an unterschiedliche Winkel des Käfigrohlings und evtl. auch Taschengrößen angeglichen werden. Beispielsweise kann damit die Käfigpositionierung 35 an einen zylindrischen oder kegelstumpfförmigen Käfigrohling 7 angepasst werden. Dazu weist die Grundplatte 38 eine Fläche 42 auf. Die Fläche 42 ist auf einer Seite der Grundplatte 38 ausgebildet, die dem Bereich 43 abgewandt ist, in dem der Käfigsteg aufgenommen werden kann. Die Fläche 42 die in einem Winkel zu dem Bereich 43 für den Käfigsteg angeordnet ist.

Wenn ein Käfigrohling 7 mit ausgestanzten Taschen an dem Werkzeug 8 positioniert wird, wird einer der Käfigstege zwischen den gegenüberliegen Rollen 37, parallel zu den Rotationsachsen der Rollen zentriert. Der Anschlag 40 führt die Rollenbefestigungselemente 37. Der Anschlag 40 verhindert, dass die Befestigungselemente 37 sich zu weit in Richtung des zwischen ihnen aufgenommen Käfigstegs bewegen können. Die Federn 40 drücken die Befestigungselemente 37 und die Rollen 36 gegen den Käfigrohling 7 bis diese an dem Steg einschnappen.

Für die Montage können bei manchen Ausführungsbeispielen die beweglichen Komponenten und die Federn eingesetzt werden und die Käfigpositionierung 35 mit der Aufnahme, also dem Rahmen 30 des Werkzeugs 8, verschraubt werden.

Wie in Figur 5 dargestellt, kann das Werkzeug 8 auf unterschiedliche Formen unterschiedlicher Käfigrohlinge 7 eingestellt werden. Dies kann unabhängig von der Bestückung des Werkzeugs 8, also mit einem Stanzstempel bzw. Fensterstempel oder einem Prägestempel erfolgen. Dazu weist das Werkzeug 8 eine Höhenverstellung 44 auf. Mit der Höhenverstellung 44 kann das Werkzeug 8 parallel zu einer axialen Richtung M des Käfigs in unterschiedlichen Höhen positioniert werden. Mit der Höhenverstellung 44 kann eine Werkzeuggrundplatte 45, auf der der Rahmen 30 drehbar befestigt ist, in die axiale Richtung M bewegt werden.

Der Rahmen 30 kann beispielsweise an einer Ecke über ein Gelenk 46 schwenkbar mit der Grundplatte 45 verbunden sein. Bei dem Ausführungsbeispiel der Fig. 5 ist der Rahmen 30 des Werkzeugs 8 mit der Ecke, die eine Seite des Rahmens 30 verbindet, an der die Matrize 26 oder die Käfigpositionierung 35 befestigt wird, und einer Seite, die dem Nebenjoch gegenüberliegt, drehbar mit der Grundplatte 45 verbunden. Das Werkzeugs 8 bzw. ein Rahmen des Werkzeugs 8 mit dem Stempel kann so gegenüber der Mittelachse M des Käfigrohlings 7 in einer Ebene, die senkrecht zur Anlagefläche 9 ausgerichtet ist, verschwenkt werden. So kann der Stempel bzw. das Werkzeug auf eine Form des Käfigrohlings 7, zylindrisch oder kegelstumpfförmig, angepasst werden. Um eine Position des Stempels und des Rahmens 30 zu arretieren umfasst das Werkzeug 8 ein Verstellelement 49. Das Verstellelement 49 stellt eine Wirkverbindung zwischen dem Rahmen 30 des Werkzeugs 8 und der Grundplatte 45 her. Über das Verstellelement 49 kann der Rahmen 30 um das Gelenk 46 geschwenkt und dann arretiert werden. Dazu ist das Verstellelement 49 an einem Rahmenteil 48, das dem Nebenjoch 31 gegenüberliegend angeordnet ist, befestig. Das Verstellelement 49 ist über ein Gelenk 47 mit dem Rahmenteil 47 befestigt.

Mit anderen Worten ausgedrückt, kann mit einer Vorrichtung bei manchen Ausführungsbeispielen ein günstiges Verfahren zum Käfigstanzen und/oder Prägen ausgeführt werden. Dies kann gegebenenfalls ohne Anschaffung einer teuren Spezialeinrichtung möglich sein. Es kann also bei manchen Ausführungsbeispielen auf eine teure Spezialpresse mit einer Teile- bzw. Taktvorrichtung verzichtet werden. Stattdessen kann mit der Vorrichtung 5 gemäß manchen Ausführungsbeispielen eine verstellbare, variable Aufnahme für den Käfig oder Käfigrohling 7 ohne teure Spannwerkzeuge bereitgestellt werden. Vorhandene Werkzeuge können bei manchen Ausführungsbeispielen ohne weiteres angepasst und beispielsweise in dem Rahmen 30 aufgenommen werden.

Bei der Vorrichtung des Ausführungsbeispiels handelt es sich um eine hydraulische Stanzund Prägevorrichtung für Stahlblechkäfige. Beispielsweise kann die Kraft auf den Stempel durch jedweden anderen Zylinder aufgebracht werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Verfahren
- 2: Spannen
- 3: Bearbeiten
- 4: Verdrehen
- 5: Vorrichtung
- 6: Spannelement
- 7: Käfigrohling
- 8: Werkzeug
- 9: Anlagefläche
- 11: Seitenring
- 12: Schiene
- 13: Unterbau
- 14: Schlitten
- 15: Unterseite
- 16: Ausschnitt
- 17: Stirnfläche
- 18: Käfigspannsegment
- 19: Gleitfläche
- 20: Innenfläche
- 21: Ausnehmung
- 22: Grundplatte
- 23: Befestigungsmittel
- 24: Rolle
- 25: Fensterstempel
- 26: Matrize
- 27: Presszylinder
- 28: Abstreifer
- 29: Hauptjoch
- 30: Rahmen
- 31: Nebenjoch
- 32: Führungsschiene
- 33: Führungsschiene
- 34: Prägestempel
- 35: Käfigpositionierung
- 36: Rolle
- 37: Befestigungselement
- 38: Grundplatte
- 40: Feder
- 41: Anschlag
- 42: Fläche
- 43: Bereich
- 44: Höhenverstellung
- 45: Werkzeuggrundplatte
- 46: Gelenk
- 47: Gelenk
- 48: Rahmenbauteil
- 49: Verstellelement

- R: radiale Richtung Käfig
- M: axiale Richtung Käfig
- L: Länge Rolle

## Patentansprüche

1. Verfahren (1) zum Herstellen eines Wälzlagerkäfigs, umfassend:
Spannen (2) eines Käfigrohlings (7) in radialer Richtung mit einem Spannelement (6);
Bearbeiten (3) des Käfigrohlings (7) an einer ersten Stelle;
Verdrehen (4) des Käfigrohlings (7) gegenüber dem Spannelement (6);
Bearbeiten (5) des Käfigrohlings (7) an einer zweiten Stelle.

2. Verfahren nach Anspruch 1, wobei das Bearbeiten (3, 5) ein Ausstanzen einer Tasche ist.

3. Verfahren (1) nach einem der vorhergehenden Ansprüche, wobei, wenn bei dem Bearbeiten (3, 5) ein Prägen von Käfigstegen erfolgt, der Käfigrohling (7) soweit gegenüber der Spannelement (6) verdreht wird, bis einer der Käfigstege an einem Anschlag (35) anliegt.

4. Verfahren (1) nach Anspruch 1, ferner umfassend: Anpassen eines Spannelements (6) auf einen Innendurchmesser des Käfigrohlings (7) zum Spannen (2) des Käfigrohlings (7).

5. Verfahren (1) nach einem der vorhergehenden Ansprüche, umfassend: Positionieren des Käfigrohlings (7) an einer Anlagefläche (9), sodass eine axiale Stirnfläche des Käfigrohlings (7) zumindest abschnittsweise an der Anlagefläche (9) anliegt.

6. Verfahren (1) nach einem der vorhergehenden Ansprüche, wobei der Käfigrohling (7) so gespannt wird, dass eine Rotationsachse (M) des Käfigrohlings (7) parallel zu einer wirkenden Gewichtskraft des Käfigrohlings (7) ausgerichtet ist.

7. Vorrichtung (5) zum Herstellen eines Wälzlagerkäfigs umfassend:
ein Spannelement (6), das ausgebildet ist, um einen Käfigrohling (7) in radialer Richtung und entlang seiner Umfangsrichtung gegenüber einem Werkzeug (8) auszurichten, sodass der Käfigrohling (7) gegenüber dem Spannelement (6) verdreht werden kann.

8. Vorrichtung (5) nach Anspruch 7, umfassend eine Anlagefläche (9), die ausgebildet ist, um zumindest abschnittweise an einer axialen Stirnfläche des Käfigrohlings (7) anzuliegen und/oder eine Anlagefläche (9) waagerecht ausgerichtet ist, sodass eine Rotationsachse (M) des Käfigrohlings (7) parallel zu einer wirkenden Gewichtskraft des Käfigrohlings (7) ausgerichtet ist.

9. Vorrichtung (5) nach einem der Ansprüche 7 oder 8, wobei das Werkzeug (8) einen Rahmen aufweist, der zum Bearbeiten des Käfigrohlings (7) an zumindest vier Seiten geschlossen ist, wobei eine Seite (31) zum Einlegen des Käfigrohlings (7) geöffnet werden kann.

10. Vorrichtung (5) nach einem der Ansprüche 7 bis 9, wobei das Spannelement (6) auf eine Mehrzahl von Innendurchmessern zu spannender Käfigrohlinge (7) einstellbar ist.
